# EUROPÄISCHE PATENTSCHRIFT

(11) **EP 2 641 489 B1**
(45) Veröffentlichungstag und Bekanntmachung des Hinweises auf die Patenterteilung: **26.09.2018**
(21) Anmeldenummer: 13159871.6
(22) Anmeldetag: 19.03.2013
(51) Int. Cl.: A24C 5/34, G01N 21/952, G01N 35/00

(54) **Messanordnung, ausgebildet und eingerichtet zum Messen von in Strangeinheiten der Tabak verarbeitenden Industrie hergestellten Strängen und/oder Strangabschnitten sowie Strangeinheit mit einer solchen Messanordnung**
Measuring arrangement constructed and arranged to measure rods and/or rod sections manufactured in rod makers of the tobacco-processing industry and rod maker with such a measuring arrangement
Dispositif de mesure, conçu pour et destiné à la mesure de tiges et/ou de sections de tige fabriquées dans des unités de fabrication de tiges de l'industrie de traitement du tabac ainsi qu'unité de fabrication de tiges dotée d'un tel dispositif de mesure

(30) Priorität: 20.03.2012 DE 102012102340; 13.06.2012 DE 102012105121
(43) Veröffentlichungstag der Anmeldung: 25.09.2013
(73) Patentinhaber: Hauni Maschinenbau GmbH, 21033 Hamburg (DE)
(72) Erfinder: Giese, Jürgen, 21493 Schwarzenbek (DE); Meins, Karsten, 21481 Lauenburg (DE); Junge, Christian, 21039 Escheburg (DE); Siems, Wolfgang, 22119 Hamburg (DE); Barkhan, Teut, 21465 Wentorf (DE); Buck, Jan, 21365 Adendorf (DE); Knopp, Reiner, 21465 Reinbek (DE); Fischer, Simon, 22335 Hamburg (DE); Goetz, Jürgen, 22885 Barsbüttel (DE)
(74) Vertreter: Stork Bamberger Patentanwälte PartmbB

(56) Entgegenhaltungen:
- EP-A2- 1 282 019
- DE-A1- 2 732 379
- US-A1- 2011 162 665

## Beschreibung

Die Erfindung betrifft eine Messanordnung, ausgebildet und eingerichtet zum Messen von in Strangeinheiten der Tabak verarbeitenden Industrie hergestellten und in Förderrichtung F transportierten Strängen und/oder Strangabschnitten, umfassend einen Messkopf mit mindestens zwei Messmodulen zur Bildung einer Messstrecke, wobei in dem Messkopf mindestens ein sich in Förderrichtung F durch den gesamten Messkopf und alle Messmodule erstreckender, durchgängiger Strangdurchlaufkanal ausgebildet ist und dem Messkopf mindestens eine Strangführungseinrichtung zugeordnet ist, sowie eine Auswerteeinheit, an die jedes Messmodul über eine Verbindung angeschlossen ist.

Die Erfindung betrifft auch eine Messanordnung, ausgebildet und eingerichtet zum Messen von in Strangeinheiten der Tabak verarbeitenden Industrie hergestellten und in Förderrichtung F transportierten Strängen und/oder Strangabschnitten, umfassend einen Messkopf mit mindestens einem Messmodul zur Bildung einer Messstrecke, wobei in dem Messkopf mindestens ein sich in Förderrichtung F durch den gesamten Messkopf und jedes Messmodul erstreckender, durchgängiger Strangdurchlaufkanal ausgebildet ist und dem Messkopf mindestens eine Strangführungseinrichtung zugeordnet ist, sowie eine Auswerteeinheit, an die jedes Messmodul über eine Verbindung angeschlossen ist.

Des Weiteren betrifft die Erfindung eine Strangeinheit zum Herstellen von Strängen und/oder Strangabschnitten der Tabak verarbeitenden Industrie mit einer Messanordnung.

Solche Messanordnungen und Strangeinheiten, die wiederum üblicherweise Bestandteil einer Strangmaschine sind, sind aus dem Stand der Technik bekannt. Die Messanordnungen können als Einzeleinrichtung eingesetzt werden. Bevorzugt und üblicherweise sind diese Messanordnungen jedoch Bestandteil der Strangmaschine. Die in der Tabak verarbeitenden Industrie eingesetzten Strangmaschinen sind hinlänglich bekannt und für Filter beispielsweise in der WO 2011/083406 A2 beschrieben. Eine Strangmaschine für Tabakstränge ist z.B. der EP 1 516 545 A1 der Anmelderin zu entnehmen. Die Messanordnungen dienen dazu, die in der als Einzelstrang- oder Mehrstrang-Strangmaschine hergestellten Stränge oder Strangabschnitte aus Tabak, Filtermaterial oder anderen zur Herstellung von (Filter-)Zigaretten, Zigarillos oder dergleichen geeigneten Materialien und Materialmischungen bezüglich ausgewählter Parameter, rein beispielhaft sind die Dichte, die Feuchte, der Durchmesser, das Vorhandensein von Fremdkörpern sowie das Vorhandensein von Verschmutzungen zu nennen, zu untersuchen bzw. zu bestimmen. Dazu werden die wahlweise umhüllten oder umhüllungsfreien Stränge als Endlosstrang oder als vom Endlosstrang in einfacher oder mehrfacher Gebrauchslänge abgetrennte Strangabschnitte kontinuierlich durch die Messanordnung transportiert. Beim Transport durch die Messanordnung erfolgt durch die Messmodule das Aufnehmen der Messdaten, die an die Auswerteeinheit weitergeleitet werden. Zum einen besteht dabei die Anforderung, die Messanordnung anzupassen, um je nach Auftrag und/oder in Abhängigkeit der Rahmenbedingungen unterschiedliche Messfunktionen abzufragen. Zum anderen sind unterschiedliche Formate der Stränge, also die unterschiedlichen Längen und insbesondere die wechselnden Durchmesser der Stränge und Strangabschnitte, konstruktiv und messtechnisch zu erfassen, was ebenfalls eine Anpassung der Messanordnung erfordert.

Im Stand der Technik sind Einzellösungen zu den Messanordnungen bekannt. Anders ausgedrückt wird für unterschiedliche Maschinentypen und Strangauslegungen in Zigaretten- und/oder Filterstrangmaschinen eine individuelle Anpassung der Messanordnungen vorgenommen. So werden die Schnittstellen der Messmodule individuell an die Hardware- und Software-Anforderungen angepasst. Die Messmodule selbst werden an die unterschiedlichen Formate, also insbesondere die unterschiedlichen Strangdurchmesser, angepasst. Eine solche individualisierte Messanordnung ist z.B. in der WO 2011/083406 A2 beschrieben. Diese Messanordnung weist mehrere in Förderrichtung hintereinander angeordnete Messmodule auf, die jeweils in einem eigenen Gehäuse angeordnet sind. Die einzelnen Messmodule sind über das Gehäuse lösbar an einer Basisplatte befestigt. Die den Messkopf bildenden Messmodule weisen einen durchgängigen Strangdurchlaufkanal auf, der sich vom Eintrittsbereich des Strangs in den Messkopf bis zum Austrittsbereich des Strangs aus dem Messkopf durch alle Messmodule einschließlich einer oder mehrerer Strangführungseinrichtungen erstreckt. Der beschriebene Messkopf weist eingangsseitig und ausgangsseitig jeweils eine Strangführungseinrichtung auf. Sämtliche Messmodule sind zur Verwertung und/oder Verarbeitung der Messdaten an eine Auswerteeinheit angeschlossen. Diese Auswerteeinheit kann beispielsweise zur Anzeige der Messdaten bzw. der von einem Sollwert abweichenden Messwerte, zum Ausschleusen von Produkten sowie zum Steuern und/oder Regeln der die Messwerte beeinflussenden und der Messanordnung vorgeordneten Komponenten ausgebildet und eingerichtet sein.

Diese Messanordnung bzw. eine Strangmaschine mit einer derartigen Messanordnung weist jedoch den Nachteil auf, dass sie unflexibel ist, da zum einen die Handhabung, Wartung und Ersatzteilhaltung für eine Vielzahl von unterschiedlichen Baugruppen und Messmodulen zu berücksichtigen ist. Mit anderen Worten existiert für jede Strangmaschine eine separate Messanordnung mit einer jeweils individualisierten Konfiguration von einzelnen Messsystemen. Zum anderen entsteht bei der Montage, Wartung und Umrüstung der Messanordnung ein hoher Handhabungsaufwand. Insbesondere kundenabhängige Konfigurationen der Messanordnungen verursachen hohe Kosten und einen erhöhten Aufwand. Des Weiteren erfolgt die Konfiguration und Wartung solcher Messanordnungen außerhalb der Strangmaschine. Anders ausgedrückt müssen die Messanordnungen von der Strangmaschine abgebaut werden, was einen zusätzlichen Montageaufwand bedeutet.

Der Erfindung liegt demnach die Aufgabe zugrunde, eine einfach handhabbare und kompakte Messanordnung zu schaffen, die einen flexiblen Einsatz in unterschiedlichen Strangmaschinen und für unterschiedliche Strangformate ermöglicht. Des Weiteren besteht die Aufgabe darin, eine entsprechende Strangeinheit vorzuschlagen.

Diese Aufgabe wird durch eine Messanordnung mit mindestens zwei Messmodulen dadurch gelöst, dass sämtliche Messmodule in einem gemeinsamen Gehäuse des Messkopfes angeordnet sind, wobei die Messmodule über elektrische und/oder pneumatische Steckverbindungen auf einen an einer Bodenplatte des Gehäuses befestigten und mehrere Steckplätze bereitstellenden Modulträger mit mindestens teilweise freier Steckplatzwahl steckbar sind. Mit dieser erfindungsgemäßen Ausgestaltung ist es auf einfache und günstige Weise möglich, unterschiedliche Konfigurationen der Messanordnung zu erreichen. Die standardisierte und modulare Bauweise der Messanordnung ermöglicht nämlich eine freie und strangunabhängige Konfiguration. Unterschiedliche und/oder gleiche Messfunktionen sind durch die mindestens teilweise freie Steckplatzwahl unterschiedlich kombinierbar und erweiterbar. Mit anderen Worten sind neben einzelnen Steckplätzen, die eine feste Messmodulzuordnung erfordern können, mindestens einige Messmodule frei, also an unterschiedlichen Positionen steckbar. Vorzugsweise sind alle Messmodule mit freier Steckplatzwahl auf den Modulträger, also an beliebiger Position, steckbar. Ein weiterer Vorteil besteht darin, dass einzelne Messmodule für unterschiedliche Einsatzfälle wieder einsetzbar sind. Durch die Anordnung sämtlicher Messmodule in einem gemeinsamen Gehäuse wird weiterhin eine besonders kompakte Bauweise realisiert.

Die Aufgabe wird auch durch eine Messanordnung mit mindestens einem Messmodul dadurch gelöst, dass das oder jedes Messmodul in einem gemeinsamen Gehäuse des Messkopfes angeordnet ist, wobei jedes Messmodul über elektrische und/oder pneumatische Steckverbindungen auf einen an einer Bodenplatte des Gehäuses befestigten und wenigstens zwei Steckplätze bereitstellenden Modulträger mit mindestens teilweise freier Steckplatzwahl steckbar ist, wobei jeder messmodulfreie Steckplatz mit einem Leermodul bestückt ist. Die sich daraus ergebende Vorteile wurden bereits im Zusammenhang mit der Messanordnung mit mindestens zwei Messmodulen beschrieben und treffen auch für diese erfindungsgemäße Ausführung zu. Durch das Auffüllen der messmodulfreien Steckplätze mit Leermodulen, die man in Abgrenzung zu den eine Messfunktion ausübenden, also operativen Messmodulen auch als virtuelle Messmodule, die keine Messfunktion ausüben, bezeichnen kann, wird auf einfache und kostengünstige Weise ein durchgängiger und vor allem geschlossener Strangdurchlaufkanal geschaffen. Damit ist diese Messanordnung noch flexibler einsetzbar.

Zweckmäßigerweise sind sämtliche Steckverbindungen als standardisierte Schnittstellen für alle Messmodule mit gleichen und/oder unterschiedlichen Messfunktionen und/oder alle Leermodule ausgebildet. Damit ist eine beliebige Konfiguration der Messanordnung auf schnelle und einfache Weise zusammenstellbar. Die einzelnen Messmodule und Leermodule lassen sich für unterschiedliche Messanordnungen wiederverwenden, so dass die Teilevielfalt reduziert werden kann.

Eine bevorzugte Weiterbildung der Erfindung ist dadurch gekennzeichnet, dass die Steckplätze auf dem Modulträger mit einer festen Teilung hintereinander und/oder nebeneinander angeordnet sind. Durch diese Ausbildung wird einerseits eine maschinen- und kundenunabhängige Anordnung der Messmodule innerhalb des Gehäuses ermöglicht. Zum anderen können die Messmodule beliebig miteinander kombiniert werden.

Vorteilhafterweise sind sämtliche Messmodule unabhängig von ihrer Messfunktion und/oder alle Leermodule bezüglich ihrer äußeren Geometrie, der Positionierung ihrer Stecker und der Positionierung des den Strangdurchlaufkanal bildenden Strangdurchlaufkanalabschnitts im Wesentlichen gleich, vorzugsweise identisch ausgebildet. Diese bevorzugte Ausführungsform stellt sicher, dass die Messmodule, aber auch die Leermodule, auf Umschlag, also um 180° um eine vertikale Achse gedreht, auf den Modulträger steckbar sind, was insbesondere bei der Anordnung der Messmodule und/oder Leermodule in einem zweikanaligen Messkopf für einen Doppelstrang von Bedeutung ist.

Eine besonders bevorzugte Ausführungsform der Erfindung zeichnet sich dadurch aus, dass in jedem Strangdurchlaufkanal ein sich in Förderrichtung F von Seitenwand zu Seitenwand des Gehäuses erstreckendes Schutzrohr angeordnet ist, wobei das Schutzrohr in das Gehäuse einschiebbar und aus dem Gehäuse herausziehbar ausgebildet ist. Durch das Schutzrohr wird der Prozessraum, in dem der Strang bzw. die Strangabschnitte geführt werden, vom Messraum der Messmodule getrennt. Damit sind insbesondere auch die elektrischen Komponenten der Messmodule vom Prozessraum getrennt. Des Weiteren verhindert das Schutzrohr im gesamten Bereich der Messmodule die Verwirbelung von Reinigungsluft, die in den Strangdurchlaufkanal geblasen wird. Selbstverständlich muss das Schutzrohr bezüglich der Materialauswahl und Beschaffenheit derart ausgebildet sein, dass die Messsignale auch gesendet und empfangen werden können. Für ein optisches Messmodul beispielsweise ist das Schutzrohr transparent ausgebildet. Die Entnehmbarkeit des Schutzrohres stellt sicher, dass die Messmodule einfach gewechselt werden können. Besonders vorteilhaft ist des Weiteren, dass mittels des Schutzrohres innerhalb des Gehäuses auch Steckplätze, weder mit einem Messmodul noch mit einem Leermodul bestückt sind, überbrückt werden können, so dass dem Strang bzw. den Strangabschnitten ein durchgängiger Strangdurchlaufkanal zur Verfügung gestellt wird.

In einer bevorzugten Ausführungsform der Erfindung ist jedem Messmodul und/oder jedem Leermodul ein Schutzrohrabschnitt zur Bildung eines sich von Seitenwand zu Seitenwand des Gehäuses erstreckenden und innerhalb jedes Strangdurchlaufkanals angeordneten Schutzrohrs zugeordnet ist, wobei die den Messmodulen zugeordneten Schutzrohrabschnitte an die Messfunktion des jeweiligen Messmoduls angepasst sind. Mit dieser Ausbildung sind Messmittel der Messmodule gegenüber dem zu prüfenden Strang bzw. Strangabschnitt abgeschirmt, so dass die Verunreinigungen das Messmittel überhaupt nicht erreichen können. Trotzdem kann bei einem Wechsel z.B. der Messfunktion des Messmoduls oder beim Umstecken an einen anderen Steckplatz ausschließlich das betreffende Messmodul oder Leermodul ausgetauscht werden. Die anderen Messmodule und/oder Leermodule sind von diesem Wechsel nicht betroffen. Damit ist die Handhabung vereinfacht und die Flexibilität ist erhöht. Durch die Anpassung der Schutzrohrabschnitte an die Messfunktion der Messmodule sind quasi bezüglich der Messfunktion spezifische Messtuben gebildet, wobei sich die Spezifikation z.B. auf das Material, die Geometrie, das Profil etc. beziehen kann.

Eine vorteilhafte Gestalt der Messanordnung ist dadurch gekennzeichnet, dass wahlweise im Eintrittsbereich und/oder Austrittsbereich des oder jedes Strangs bzw. Strangabschnitts in das Gehäuse bzw. aus dem Gehäuse heraus und/oder in einem mittleren Abschnitt zwischen dem Eintrittsbereich E und dem Austrittsbereich A eine Strangführungseinrichtung angeordnet ist, wobei mindestens eine Strangführungseinrichtung als radial verstellbare Mehrpunktlagerung ausgebildet ist. Dadurch wird die formatunabhängige Führung der Stränge bzw. Strangabschnitte gewährleistet.

Zweckmäßigerweise sind im Auslaufbereich jedes Strangs bzw. Strangabschnitts aus dem Schutzrohrabschnitt jedes Messmoduls und/oder jedes Leermoduls Dichtmittel zum Abdichten eines Messmoduls und/oder eines Leermoduls gegenüber einem in Förderrichtung F nachfolgenden Messmodul und/oder Leermodul und/oder einer Gehäusewand vorgesehen, wobei das Dichtmittel zum aktiven Dichten ausgebildet und eingerichtet ist. Mit dieser Weiterbildung wird erreicht, dass das Schutzrohr, das aus den mehreren Schutzrohrabschnitten gebildet ist, insbesondere im Bereich der Übergangsstellen zwischen zwei Mess- und/oder Leermodulen oder zwischen einem Mess- oder Leermodul und einer Gehäusewand geschlossen ist. Durch die Dichtmittel wird der Grad der Verunreinigung weiter reduziert.

Vorzugsweise ist die Messanordnung zur Messung von mindestens zwei parallel zueinander, in Förderrichtung F verlaufenden Strängen bzw. Strangabschnitten ausgebildet und eingerichtet, derart, dass für jeden der Stränge bzw. Strangabschnitte eine mindestens ein Messmodul und/oder ein Leermodul aufweisende Messtrecke gebildet ist, wobei in dem Messkopf mindestens zwei sich in Förderrichtung F durch den gesamten Messkopf und alle Messmodule und/oder Leermodule erstreckende, durchgängige Strangdurchlaufkanäle ausgebildet sind. Damit ist eine Messanordnung für eine Zweistrangmaschine geschaffen. Das erfindungsgemäß modulare 2-kanalige Messsystem ermöglicht das parallele Messen zweier Stränge bzw. Strangabschnitte, wobei jeder Strang optional wegen der Modularität und der freien Steckplatzwahl innerhalb einer Messanordnung unterschiedlichen Messfunktionen ausgesetzt sein kann.

Vorteilhafterweise weist der Modulträger in Förderrichtung F der Stränge bzw. Strangabschnitte mindestens zwei nebeneinander angeordnete Reihen von jeweils mehreren hintereinander angeordneten Steckplätzen für die Messmodule und/oder Leermodule auf, wobei die Steckplätze beider Reihen in Förderrichtung F eine identische Teilung T aufweisen und die Steckplätze benachbarter Reihen in Förderrichtung F versetzt zueinander angeordnet sind. Das bedeutet, die Abstände zwischen zwei Steckplätzen in Förderrichtung F für alle Reihen bzw. Messstrecken stets gleich sind, wobei die beiden Reihen in Förderrichtung F vorzugsweise um den Betrag T/2 versetzt zueinander liegen. Dies erleichtert zum einen das auf Umschlag um 180° verdrehte Stecken der Messmodule und/oder Leermodule. Zum anderen ermöglicht diese Ausbildung einen besonders einfachen und direkten elektrischen Anschluss der Messmodule und/oder Leermodule an die Auswerteeinheit. Anders ausgedrückt können die von den Steckplätzen an die Auswerteeinheit führenden Leitungen direkt und ohne Umweg geführt werden.

Eine weitere zweckmäßige Weiterbildung zeichnet sich dadurch aus, dass die in benachbarten Reihen nebeneinander liegenden Messmodule und/oder Leermodule mit den einander zugekehrten Seitenflächen miteinander geführt sind. Dadurch erhält die Messanordnung trotz der Modularität der Messmodule und/oder Leermodule eine ausreichende Stabilität, wodurch die Messergebnisse positiv beeinflusst werden.

Die Aufgabe wird auch durch eine Strangeinheit der eingangs genannten Art dadurch gelöst, dass die Messanordnung nach einem der Ansprüche 1 bis 12 ausgebildet ist. Die sich daraus ergebenden Vorteile wurden bereits im Zusammenhang mit der Messanordnung beschrieben, weshalb zur Vermeidung von Wiederholungen auf die entsprechenden Passagen verwiesen wird. Durch die erfindungsgemäße Strangeinheit mit der modularen Messanordnung ist eine Produktionseinrichtung geschaffen, mittels der online individuelle Messfunktionen abgefragt werden können, wobei die Messfunktionen vor Ort in der Strangeinheit austauschbar, neu konfigurierbar und/oder vervielfältigbar sind.

Eine bevorzugte Ausführungsform zeichnet sich dadurch aus, dass das Gehäuse quer zur Förderrichtung F des oder jedes Strangs bzw. Strangabschnitts auf Führungsschienen aus einer Arbeitsposition in eine Wartungsposition und umgekehrt bewegbar ist. Dadurch kann das Gehäuse mit allen Messmodulen wie eine Schublade hervorgezogen werden. Durch den freien Zugang der Messmodule kann das Reinigen, Warten, Umrüsten oder dergleichen der Messanordnung schnell und problemlos an der Maschine ausgeführt werden, ohne den Messkopf ausbauen zu müssen.

Besonders bevorzugt ist eine Ausführungsform, die sich dadurch auszeichnet, dass das Gehäuse an der Strangeinheit benachbart zu einer Strangschneidevorrichtung lösbar befestigt ist und einen Deckel umfasst, der parallel zur Förderrichtung F des oder jedes Strangs bzw. Strangabschnitts gelagert und werkzeugfrei entnehmbar oder zu öffnen ist und elektrische Kontakte aufweist, die beim Öffnen des Gehäuses die Spannungsversorgung zum Modulträger unterbrechen. Damit ist eine einfache und schnelle Zugänglichkeit zu Wartungszwecken und/oder Nachrüst- bzw. Umsteckzwecken geschaffen.

Weitere zweckmäßige und/oder vorteilhafte Merkmale und Weiterbildungen der Erfindung ergeben sich aus den Unteransprüchen und der Beschreibung. Eine besonders bevorzugte Ausführungsform der Erfindung wird anhand der beigefügten Zeichnung näher erläutert. In der Zeichnung zeigt:
- Fig. 1: eine schematische Darstellung einer 2-kanaligen Messanordnung mit einem teilbestückten Gehäuse in perspektivischer Ansicht,
- Fig. 2: eine Seitenansicht einer Messanordnung im Schnitt mit einer eingangsseitig angeordneten Schneideinrichtung,
- Fig. 3: eine Vorderansicht der Messanordnung gemäß Figur 2,
- Fig. 4: eine Draufsicht auf einen Modulträger als Bodenplatte des Gehäuses, und
- Fig. 5: eine schematische Darstellung einer Strangmaschine mit einer solchen Messanordnung.

Die in der Zeichnung dargestellte Messanordnung dient zum Messen von zwei parallel geführten Tabaksträngen. Selbstverständlich umfasst die Erfindung auch Messanordnungen für einen einzelnen Strang oder mehr als zwei Stränge. Auch ist die erfindungsgemäße Messanordnung nicht auf das Messen von Tabaksträngen beschränkt. Vielmehr können auch Filterstränge, Multisegmentfilterstränge oder Stränge und Strangabschnitte aus anderen Materialien bzw. Materialmischungen der Tabak verarbeitenden Industrie mittels der erfindungsgemäßen Messanordnung gemessen werden.

Die Erfindung betrifft eine Messanordnung 10, die zum Messen von in Strangeinheiten 11 der Tabak verarbeitenden Industrie hergestellten und in Förderrichtung F transportierten Strängen 12 und/oder Strangabschnitten, die von einem Strang 12 abgetrennt sind und hintereinander liegend wieder einen Strang 12 bilden, ausgebildet und eingerichtet ist. Die Messanordnung 10 umfasst einen Messkopf 13 mit mindestens zwei Messmodulen 14. Die Messmodule 14 bilden mindestens eine Messstrecke, die sich in Förderrichtung F des oder jedes Strangs 12 erstreckt. In dem Messkopf 13 ist mindestens ein sich in Förderrichtung F durch den gesamten Messkopf 13 und alle Messmodule 14 erstreckender, durchgängiger Strangdurchlaufkanal 15 ausgebildet. Des Weiteren ist dem Messkopf 13 mindestens eine Strangführungseinrichtung 16 zugeordnet. Der Messkopf 13 bzw. alle dazugehörigen Messmodule 14 sind über Verbindungen mit einer Auswerteeinheit 18 verbunden.

Erfindungsgemäß sind sämtliche Messmodule 14 in einem gemeinsamen Gehäuse 19 des Messkopfes 13 angeordnet, wobei die Messmodule 14 über elektrische und/oder pneumatische Steckverbindungen 17 auf einen an einer Bodenplatte 20 des Gehäuses 19 befestigten und mehrere Steckplätze 21 bereitstellenden Modulträger 22 mit mindestens teilweise freier Steckplatzwahl steckbar sind. Das bedeutet, dass die Messmodule 14 an unterschiedlichen Steckplätzen 21 auf den Modulträger 22 steckbar sind. Es können mehrere Messmodule 14 mit identischer Messfunktion, aber auch mehrere Messmodule 14 mit unterschiedlicher Messfunktion vorgesehen sein. Die Reihenfolge der Messmodule 14, insbesondere wenn diese eine unterschiedliche Messfunktion aufweisen, kann beliebig variieren. Besonders bevorzugt ist ein Modulträger 22 mit komplett freier Steckplatzwahl, so dass die Messmodule 14 an beliebigen Steckplätzen 21 auf den Modulträger 22 steckbar sind. Es können auch Steckplätze 21 frei bleiben.

Die Erfindung betrifft auch eine Messanordnung 10, die zum Messen von in Strangeinheiten 11 der Tabak verarbeitenden Industrie hergestellten und in Förderrichtung F transportierten Strängen 12 und/oder Strangabschnitten, die von einem Strang 12 abgetrennt sind und hintereinander liegend wieder einen Strang 12 bilden, ausgebildet und eingerichtet ist, umfassend einen Messkopf 13 mit mindestens einem Messmodul 14 zur Bildung einer Messstrecke, wobei in dem Messkopf 13 mindestens ein sich in Förderrichtung F durch den gesamten Messkopf 13 und jedes Messmodul 14 erstreckender, durchgängiger Strangdurchlaufkanal 15 ausgebildet ist und dem Messkopf 13 mindestens eine Strangführungseinrichtung 16 zugeordnet ist, sowie eine Auswerteeinheit 18, an die jedes Messmodul 14 über eine Verbindung angeschlossen ist.

Erfindungsgemäß ist das oder jedes Messmodul 14 in einem gemeinsamen Gehäuse 19 des Messkopfes 13 angeordnet, wobei jedes Messmodul 14 über elektrische und/oder pneumatische Steckverbindungen 17 auf einen an einer Bodenplatte 20 des Gehäuses 19 befestigten und wenigstens zwei Steckplätze 21 bereitstellenden Modulträger 22 mit mindestens teilweise freier Steckplatzwahl steckbar ist, wobei jeder messmodulfreie Steckplatz 21 mit einem Leermodul bestückt ist. Leermodule sind im weitesten Sinne auch Messmodule. Die Messmodule 14 beinhalten bezüglich des Strangs 12 eine Messfunktion und sind daher operativ einsetzbar. Die Leermodule beinhalten keine Messfunktion bezüglich des Strangs und sollen quasi als Dummy oder Platzhalter für ein Messmodul 14 dienen. Man kann die Leermodule daher auch als virtuelle Messmodule bezeichnen.

Die im Folgenden beschriebenen Merkmale und Weiterbildungen stellen für sich betrachtet oder in Kombination miteinander bevorzugte Ausführungsformen der Erfindung dar.

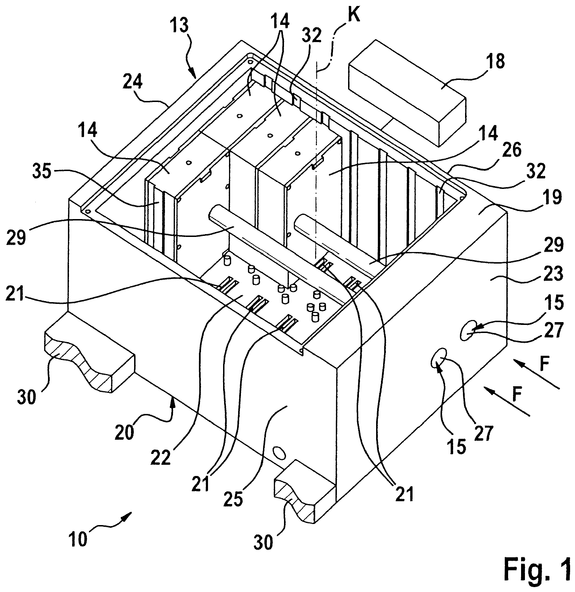

In der Figur 1 ist beispielhaft eine Messanordnung 10 zum Messen von zwei parallel zueinander, in Förderrichtung F verlaufenden Strängen 12 bzw. Strangabschnitten gezeigt. Das Gehäuse 19 weist neben der Bodenplatte 20, die als Modulträger 22 ausgebildet ist, vorzugsweise vier Seitenwände 23, 24, 25, 26 sowie einen nicht explizit dargestellten Deckel auf, über den das Gehäuse 19 z.B. durch Klappen oder Schieben zu öffnen und zu schließen ist. Vorzugsweise ist der Deckel mittels mindestens eines Scharniers klappbar ausgebildet. Die in Förderrichtung F eingangsseitig und ausgangsseitig angeordneten Seitenwände 23, 24 weisen entsprechend der Anzahl der zu messenden Stränge 12 Öffnungen 27 zum Eintritt und Austritt des oder jedes Strangs 12 in die Messanordnung 10 auf, wobei die Öffnungen 27, im Ausführungsbeispiel sind zwei Öffnungen 27 ausgebildet, den Strangdurchlaufkanal 15 bzw. im vorliegenden Ausführungsbeispiel die beiden Strangdurchlaufkanäle 15 fortsetzen. Die Öffnungen 27 sind bezogen auf eine Mittelachse K eines Messmoduls 14 vorzugsweise außermittig angeordnet (siehe z.B. Figur 1), um bei nebeneinander liegenden Messmodulen 14 an den durch die Strangeinheit 11 definierten Abstand zwischen den beiden Strängen 12 angepasst zu sein. Die gezeigte Ausführungsform ist zum Konfigurieren der Messanordnung 10 in einer so genannten 7.2-Anordnung ausgebildet. Das bedeutet, dass zwei nebeneinander angeordnete Messstrecken M₁ und M₂ mit jeweils sieben in Reihe angeordneten Steckplätzen 21 vorgesehen sind. Es ist auch z.B. eine so genannte 5.1-Anordnung, also eine einzelne Messstrecke mit fünf Steckplätzen 21, möglich. Letztlich sind die Anzahl der nebeneinander angeordneten Messstrecken einerseits und die Anzahl der Steckplätze 21 pro Messstrecke andererseits frei wählbar.

Bevorzugt ist eine Ausführungsform, bei der der Modulträger 22 vier Steckplätze 21 in einer 4.1-Anordnung bzw. acht Steckplätze 21 in einer 4.2-Anordnung aufweist. Beispielhaft ist für jede Messstrecke nur ein einzelnes Messmodul 14 vorgesehen. Die anderen drei Steckplätze 21 jeder Messstrecke sind zur Bildung eines geschlossenen Strangdurchlaufkanals 15 mit Leermodulen bestückt. Diese Leermodule können elektrische Kontakte aufweisen, damit die komplette Bestückung (aller Steckplätze 21) und/oder die Position von Messmodulen 14 und Leermodulen überwachbar ist. Insoweit ist der Begriff "Messmodul" auch für die Leermodule zutreffend. Die Erkennung, ob ein Steckplatz 21 überhaupt bestückt ist und ob ein Steckplatz 21 mit einem Messmodul 14 oder einem Leermodul bestückt ist, kann für die Selbstkonfiguration der Messanordnung 10 von Bedeutung sein.

Vorzugsweise sind sämtliche Steckverbindungen 17 zwischen den Messmodulen 14 und/oder den Leermodulen und dem Modulträger 22 als standardisierte Schnittstellen für alle Messmodule 14 unabhängig von ihrer Messfunktion ausgebildet. Die jedem Messmodul 14 und jedem Leermodul zugeordneten Stecker, die für alle Messmodule 14 und Leermodule identisch sind, bilden zusammen mit den Steck-plätzen 21 des Modulträgers 22 die Steckverbindungen 17. Anstelle der Stecker und der korrespondierenden Steckplätze 21 zur Bildung der Steckverbindungen 17 können auch andere Leitungsverbindungen und/oder -kontakte zwischen Messmodul 14 bzw. Leermodul und Modul-träger 22 vorgesehen sein. Durch die Standardisierung der Steckverbindungen 17 können in einer Messstrecke mehrere Messmodule 14 mit unterschiedlichen Messfunktionen angeordnet sein. Allerdings können auch mehrere Messmodule 14 mit einer gleichen Messfunktion in einer Messstrecke hintereinander angeordnet sein. Insbesondere besteht die Möglichkeit, die Messmodule 14 auf beliebige Modulträger 22 an unterschiedlichen Strangeinheiten 11 zu stecken.
Die jeweils freien Steckplätze 21 können mit den beschriebenen Leermodulen bestückt sein.

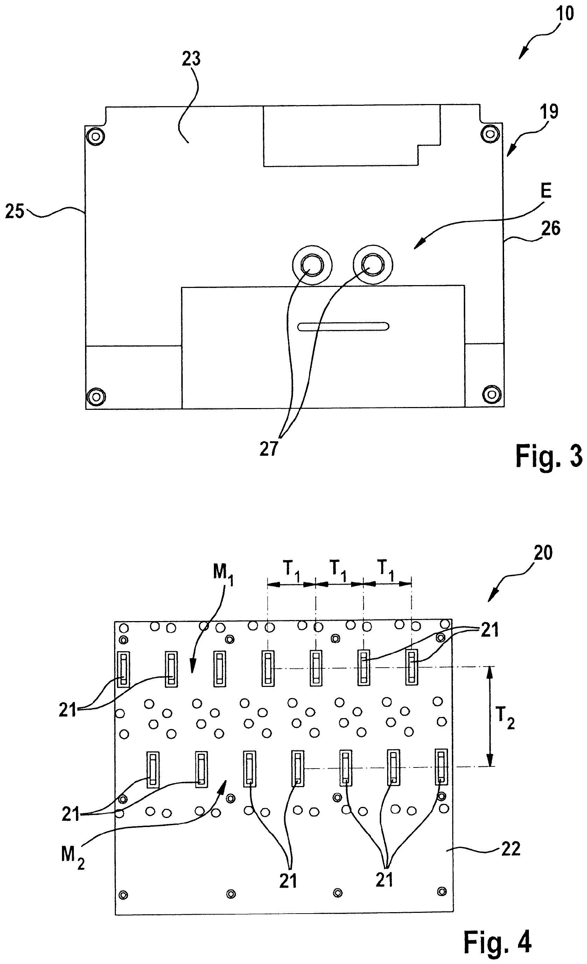

Dazu ist bevorzugt vorgesehen, dass die Steckplätze 21 auf dem Modulträger 22 mit einer festen Teilung T hintereinander und/oder nebeneinander angeordnet sind. Alle Steckplätze 21 einer Messstrecke M₁ bzw. M₂ weisen in Förderrichtung F eine Teilung T₁ auf. Das bedeutet, dass die Abstände zwischen den einzelnen Steckplätzen 21 in jeder Messstrecke gleich sind. Für den Fall, dass mehr als eine Messstrecke vorgesehen ist, im Beispiel der Figur 1 sind zwei Messstrecken M₁ und M₂ vorgesehen, ist die Teilung T₂ zwischen benachbarten Messstrecken quer zur Förderrichtung F gleich (siehe z.B. Figur 4). Die Steckplätze 21 benachbarter Messstrecken können quer zur Förderrichtung F fluchtend ausgerichtet sein. Das bedeutet, dass die Steckplätze 21 benachbarter Messstrecken auf einer quer zur Förderrichtung F verlaufenden (gedachten) Linie liegen. Bevorzugt sind die Steckplätze 21 benachbarter Messstrecken in Förderrichtung F versetzt zueinander angeordnet. Anders ausgedrückt sind die Steckplätze 21 benachbarter Messstrecken auf Lücke gesetzt, vorzugsweise versetzt um den Betrag T₁/2.

Korrespondierend zu der standardisierten Ausbildung und Anordnung der Steckplätze 21 auf dem Modulträger 22 sind sämtliche Messmodule 14 unabhängig von ihrer Messfunktion und/oder alle Leermodule bezüglich ihrer äußeren Geometrie, der Positionierung der Stecker und der Positionierung des den Strangdurchlaufkanals 15 bildenden Strangdurchlaufkanalabschnitts identisch ausgebildet, so dass jedes Messmodul 14 und/oder jedes Leermodul auf jeden beliebigen Modulträger 22 und auf jeden Steckplatz 21 eines Modulträgers 22 steckbar ist, und zwar in jeder Orientierung. Anders ausgedrückt können die Messmodule 14 und/oder die Leermodule um 180° verdreht um ihre Mittelachse K auf den Modulträger 22 gesteckt werden, und zwar dann auf die jeweils andere Messstrecke.

Eine weitere bevorzugte Option besteht darin, dass in jedem Strangdurchlaufkanal 15 ein sich in Förderrichtung F von Seitenwand 23 zu Seitenwand 24 des Gehäuses 19 erstreckendes Schutzrohr 29 angeordnet ist, wobei das Schutzrohr 29 in das Gehäuse 19 einschiebbar und aus dem Gehäuse 19 herausziehbar ausgebildet ist. Dieses Schutzrohr 29 ist vorzugsweise lösbar am Gehäuse 19 befestigt und kann in Wirkverbindung mit dem Deckel stehen. Das bedeutet, dass das Schutzrohr 29 eine Verriegelung des Deckels auslöst, so dass der Deckel erst nach dem Entnehmen des Schutzrohres 29 geöffnet werden kann. Die Materialeigenschaften des Schutzrohres 29 sind an die vorliegenden Aufgaben der Messmodule 14 angepasst. So sind optische, kapazitive, Stabilitäts -und Festigkeitsbelange sowie antistatische u.a. Gesichtspunkte zu berücksichtigen. Es wird ein einziges durchgängiges Rohr vorzugsweise aus einem optischen Kunststoff, beispielsweise Cyclo-Olefin-(Co)Polymere (COP/COC), verwendet.

In einer anderen Option ist jedem Messmodul 14 und/oder jedem Leermodul ein Schutzrohrabschnitt zur Bildung eines sich von Seitenwand 23 zu Seitenwand 24 des Gehäuses 19 erstreckenden und innerhalb jedes Strangdurchlaufkanals 15 angeordneten Schutzrohrs 29 zugeordnet, wobei die den Messmodulen 14 zugeordneten Schutzrohrabschnitte an die Messfunktion des jeweiligen Messmoduls 14 angepasst sind. Das bedeutet, dass das Schutzrohr 29 mehrteilig ausgebildet ist, nämlich aus mehreren Schutzrohrabschnitten. In jedem Messmodul 14 und jedem Leermodul ist ein solcher Schutzrohrabschnitt fest aber lösbar in dem Strangdurchlaufkanal(abschnitt) angeordnet und schirmt Messmittel der Messanordnung 10 von dem oder jedem Strang 12 bzw. Strangabschnitt ab. Die Schutzrohrabschnitte, insbesondere diejenigen, die einem Messmodul 14 zugeordnet sind, können zur Anpassung an die jeweilige Messfunktion z.B. hinsichtlich der Materialauswahl und -eigenschaften und/oder der Profilquerschnitte und/oder der Größe und Durchmesser spezifisch auf das jeweilige Messmittel in dem Messmodul 14 unterschiedlich ausgebildet sein.

Optional ist wahlweise im Eintrittsbereich E und/oder im Austrittsbereich A des oder jedes Strangs 12 bzw. Strangabschnitts in das Gehäuse 19 bzw. aus dem Gehäuse 19 heraus und/oder in einem mittleren Abschnitt zwischen dem Eintrittsbereich E und dem Austrittsbereich A eine Strangführungseinrichtung 16 angeordnet, wobei mindestens eine, vorzugsweise jedoch jede Strangführungseinrichtung 16 als radial verstellbare Mehrpunktlagerung ausgebildet ist. Letztlich kann die Strangführungseinrichtung 16 auch als einfache und starre Führung ausgebildet sein. Durch die radial verstellbare Mehrpunktlagerung, beispielsweise nach dem Prinzip eines Dreibackenfutters, ist die Strangführungseinrichtung 16 jedoch formatunabhängig. Jede Strangführungseinrichtung 16 kann separat zum Gehäuse 19 ausgebildet sein. Die oder jede Strangführungseinrichtung 16 kann aber auch an allen Positionen zwischen dem Eintrittsbereich E und dem Austrittsbereich A angeordnet sein. Bevorzugt sind die Strangführungseinrichtungen 16 jedoch in die Seitenwände 23, 24 des Gehäuses 19 integriert.

Wie weiter oben erwähnt, kann das Schutzrohr 29 auch mehrteilig ausgebildet sein. In diesem Fall weist das Schutzrohr 29 Nahtstellen auf. Um die Messmodule 14 und insbesondere deren Messmittel gegen Verunreinigung zu schützen, ist es bevorzugt, dass im Auslaufbereich jedes Strangs 12 bzw. Strangabschnitts aus dem Schutzrohrabschnitt jedes Messmoduls 14 und/oder jedes Leermoduls Dichtmittel zum Abdichten eines Messmoduls 14 und/oder eines Leermoduls gegenüber einem in Förderrichtung F nachfolgenden Messmodul 14 und/oder Leermodul und/oder einer Gehäusewand vorgesehen sind. Neben passiven, also unveränderbaren Dichtmitteln, sind bevorzugt Dichtmittel zum aktiven, also steuerbaren bzw. veränderbaren, Dichten vorgesehen. Mit den Dichtmitteln werden insbesondere benachbarte, jedoch mit einem Abstand zueinander angeordnete Messmodule 14 und/oder Leermodule gegeneinander bzw. gegenüber einer äußeren Gehäusewand abgedichtet.

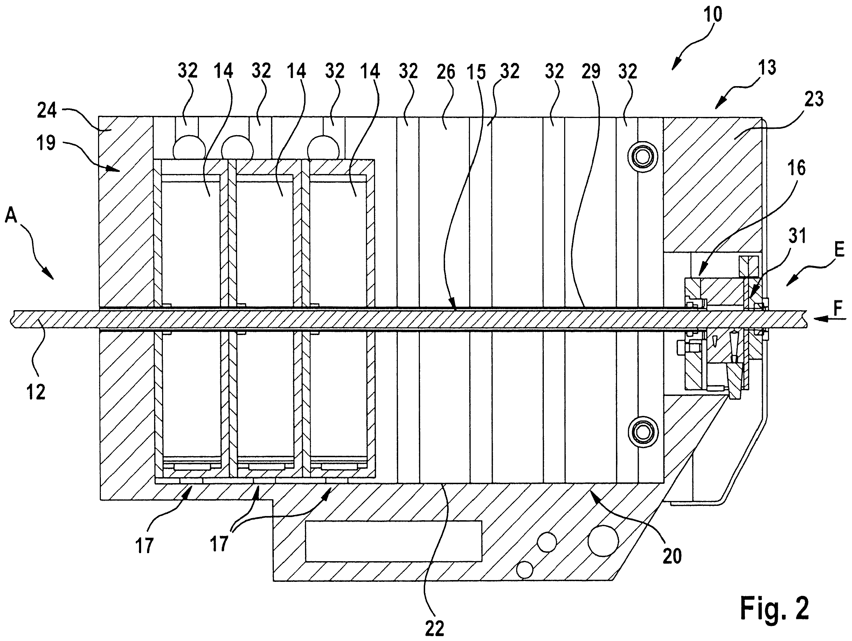

In der Figur 2 ist eine Ausführungsform der Messanordnung 10 gezeigt, die eine Schneideinrichtung 31 umfasst. Diese Schneideinrichtung 31 ist im Eintrittsbereich E angeordnet und kann als vom Gehäuse 19 lösbares Modul oder als integraler Bestandteil des Gehäuses 19 ausgebildet sein. Im letztgenannten Fall kann die Schneideinrichtung 31 integraler Bestandteil der Seitenwand 23 sein. Mittels der Schneideinrichtung 31 kann der Strang 12 im Stillstand der Maschine durchtrennt und gleichfalls der Strangdurchlaufkanal 15 einseitig verschlossen werden. Mittels nachfolgend eingeleiteter Druckluft kann dann der im Messkopf 13 verbliebene Stranganteil herausgefördert und so der Messkopf 13 gereinigt werden, so dass nach einem Strangbruch ein automatischer Wiederanlauf der Maschine gewährleistet ist.

Die Seitenwände 23 bis 26 können einstückig miteinander verbunden sein. Die Seitenwände 23 bis 26 können aber auch modular zusammengefügt sein. Insbesondere die eingangsseitige Seitenwand 23 mit der integrierten Schneideinrichtung 31 kann lösbar am Gehäuse 19 befestigt sein. Vorzugsweise weist eine der parallel zur Förderrichtung F verlaufenden Seitenwände 25, 26 Führungsnuten 32 und/oder Führungsleisten oder andere Führungsmittel auf, die zu entsprechenden Vorsprüngen 35 und/oder Vertiefungen korrespondieren. Anders ausgedrückt ist zwischen jedem Messmodul 14 und/oder jedem Leermodul und dem Gehäuse 19 direkt oder indirekt eine Führungsverbindung hergestellt. In der Figur 1 sind die Messmodule 14 bzw. Leermodule der hinteren Messstrecke M₁, die drei Messmodule 14 bzw. Leermodule umfasst, direkt am bzw. im Gehäuse 19 und genauer in der Seitenwand 26 geführt. Das eine Messmodul 14 der zweiten Messstrecke M₂ ist dagegen indirekt am Gehäuse 19 geführt, nämlich über ein Messmodul 14 bzw. Leermodul der ersten Messstrecke M₁. Die in benachbarten Reihen bzw. Messstrecken liegenden Messmodule 14 und/oder Leermodule sind dazu mit den einander zugekehrten Seitenflächen miteinander geführt, wobei die Führungen zwischen den Messmodulen 14 bzw. Leermodulen untereinander mit den Führungen zwischen den Messmodulen 14 bzw. Leermodulen und dem Gehäuse 19 identisch sind.

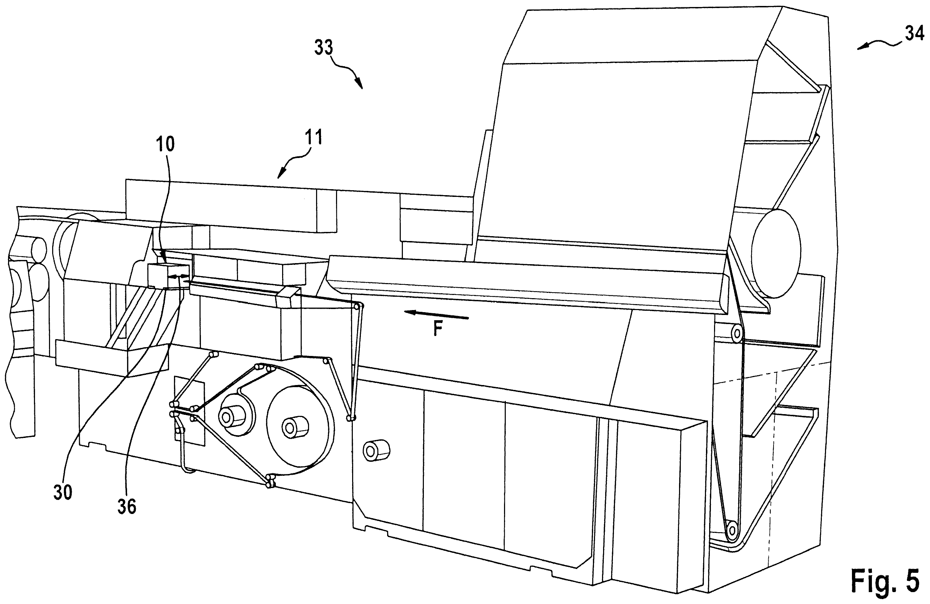

In der Figur 5 ist schematisch eine Messanordnung 10 dargestellt, die in eine Strangeinheit 11 integriert ist. Die Strangeinheit 11 ist üblicherweise Bestandteil einer Strangmaschine 33, zu der bei einer Ausbildung als Tabakstrangmaschine eine Verteilereinheit 34 (siehe Figur 5) und bei einer Ausbildung als Filterstrangmaschine eine Filtertow-Aufbereitungseinheit gehören. Solche Strangmaschinen 33 und Strangeinheiten 11 sind hinlänglich bekannt, weshalb auf eine detaillierte Beschreibung verzichtet wird. Die erfindungsgemäße Strangeinheit 11 zeichnet sich nun dadurch aus, dass die zuvor beschriebene Messanordnung 10 in die Strangeinheit 11 und damit in die Produktion integriert ist, so dass eine Online-Messung mit schnell veränderbarer Konfiguration der Messanordnung 10 erreicht wird. Optional ist die Messanordnung 10 bzw. genauer das Gehäuse 19 quer zur Förderrichtung F des oder jedes Strangs 12 bzw. Strangabschnitts auf Führungsschienen 30 aus einer Arbeitsposition in eine Wartungsposition und umgekehrt (siehe Pfeil 36) bewegbar. Anstelle der Führungsschienen 30 kann auch ein anderes Linearführungssystem eingesetzt werden. Durch die Bewegbarkeit des Gehäuses 19 ist quasi ein Schubladensystem geschaffen, derart, dass das Gehäuse 19 aus der Arbeitsposition vorgezogen werden kann. In dieser vorgezogenen Wartungsposition können einfach Wartungs- und Umrüstarbeiten sowie Um- oder Neukonfigurationen an der Messanordnung 10 ausgeführt werden, und zwar an der Maschine.

Das Gehäuse 19 ist vorzugsweise in der Arbeitsposition verriegelbar. Nach dem Lösen der Verriegelung kann das Gehäuse 19 in die Wartungsposition vorgezogen werden, um freien Zugang zu der Messanordnung 10 und insbesondere zu den Messmodulen 14 und/oder den Leermodulen zu gewährleisten. In der Wartungsposition kann die Messanordnung 10 und insbesondere das Schutzrohr 29 gereinigt oder aus dem Strangdurchlaufkanal 15 herausgezogen werden. Nach dem Entfernen des Schutzrohres 29 lässt sich der Deckel des Gehäuses 19 öffnen und gibt die Messmodule 14 bzw. Leermodule zur Konfiguration des Modulträgers 22 frei. Diese Vorgehensweise ist jedoch nur rein beispielhaft beschrieben.

In einer weiteren Ausführungsform ist das Gehäuse 19 benachbart zu der Schneideinrichtung 31 oder einer weiteren Schneideinrichtung an der Strangeinheit 11 lösbar befestigt. Das Gehäuse 19 umfasst einen Deckel, der parallel zur Förderrichtung F des oder jedes Strangs 12 bzw. Strangabschnitts gelagert und werkzeugfrei entnehmbar oder zu öffnen ist. Das Gehäuse 19 umfasst elektrische Kontakte, mittels denen die Spannungsversorgung zum Modulträger 22 beim Öffnen des Gehäuses 19 unterbrochen werden kann.

## Patentansprüche

1. Messanordnung (10), ausgebildet und eingerichtet zum Messen von in Strangeinheiten (11) der Tabak verarbeitenden Industrie hergestellten und in Förderrichtung F transportierten Strängen (12) und/oder Strangabschnitten, umfassend einen Messkopf (13) mit mindestens zwei Messmodulen (14) zur Bildung einer Messstrecke, wobei in dem Messkopf (13) mindestens ein sich in Förderrichtung F durch den gesamten Messkopf (13) und alle Messmodule (14) erstreckender, durchgängiger Strangdurchlaufkanal (15) ausgebildet ist und dem Messkopf (13) mindestens eine Strangführungseinrichtung (16) zugeordnet ist, sowie eine Auswerteeinheit (18), an die jedes Messmodul (14) über eine Verbindung angeschlossen ist, **dadurch gekennzeichnet, dass** sämtliche Messmodule (14) in einem gemeinsamen Gehäuse (19) des Messkopfes (13) angeordnet sind, wobei die Messmodule (14) über elektrische und/oder pneumatische Steckverbindungen (17) auf einen an einer Bodenplatte (20) des Gehäuses (19) befestigten und mehrere Steckplätze (21) bereitstellenden Modulträger (22) mit mindestens teilweise freier Steckplatzwahl steckbar sind.

2. Messanordnung (10), ausgebildet und eingerichtet zum Messen von in Strangeinheiten (11) der Tabak verarbeitenden Industrie hergestellten und in Förderrichtung F transportierten Strängen (12) und/oder Strangabschnitten, umfassend einen Messkopf (13) mit mindestens einem Messmodul (14) zur Bildung einer Messstrecke, wobei in dem Messkopf (13) mindestens ein sich in Förderrichtung F durch den gesamten Messkopf (13) und jedes Messmodul (14) erstreckender, durchgängiger Strangdurchlaufkanal (15) ausgebildet ist und dem Messkopf (13) mindestens eine Strangführungseinrichtung (16) zugeordnet ist, sowie eine Auswerteeinheit (18), an die jedes Messmodul (14) über eine Verbindung angeschlossen ist, **dadurch gekennzeichnet, dass** das oder jedes Messmodul (14) in einem gemeinsamen Gehäuse (19) des Messkopfes (13) angeordnet ist, wobei jedes Messmodul (14) über elektrische und/oder pneumatische Steckverbindungen (17) auf einen an einer Bodenplatte (20) des Gehäuses (19) befestigten und wenigstens zwei Steckplätze (21) bereitstellenden Modulträger (22) mit mindestens teilweise freier Steckplatzwahl steckbar ist, wobei jeder messmodulfreie Steckplatz (21) mit einem Leermodul bestückt ist.

3. Messanordnung nach Anspruch 1 oder 2, **dadurch gekennzeichnet, dass** sämtliche Steckverbindungen (17) als standardisierte Schnittstellen für alle Messmodule (14) mit gleichen und/oder unterschiedlichen Messfunktionen und/oder für alle Leermodule ausgebildet sind.

4. Messanordnung nach einem der Ansprüche 1 bis 3, **dadurch gekennzeichnet, dass** die Steckplätze (21) auf dem Modulträger (22) mit einer festen Teilung T hintereinander und/oder nebeneinander angeordnet sind.

5. Messanordnung nach einem der Ansprüche 1 bis 4, **dadurch gekennzeichnet, dass** sämtliche Messmodule (14) unabhängig von ihrer Messfunktion und/oder alle Leermodule bezüglich ihrer äußeren Geometrie, der Positionierung ihrer Stecker und der Positionierung des den Strangdurchlaufkanal (15) bildenden Strangdurchlaufkanalabschnitts im Wesentlichen gleich, vorzugsweise identisch ausgebildet sind.

6. Messanordnung nach einem der Ansprüche 1 bis 5, **dadurch gekennzeichnet, dass** in jedem Strangdurchlaufkanal (15) ein sich in Förderrichtung F von Seitenwand (23) zu Seitenwand (24) des Gehäuses (19) erstreckendes Schutzrohr (29) angeordnet ist, wobei das Schutzrohr (29) in das Gehäuse (19) einschiebbar und aus dem Gehäuse (19) herausziehbar ausgebildet ist.

7. Messanordnung nach einem der Ansprüche 1 bis 6, **dadurch gekennzeichnet, dass** jedem Messmodul (14) und/oder jedem Leermodul ein Schutzrohrabschnitt zur Bildung eines sich von Seitenwand (23) zu Seitenwand (24) des Gehäuses (19) erstreckenden und innerhalb jedes Strangdurchlaufkanals (15) angeordneten Schutzrohrs (29) zugeordnet ist, wobei die den Messmodulen (14) zugeordneten Schutzrohrabschnitte an die Messfunktion des jeweiligen Messmoduls (14) angepasst sind.

8. Messanordnung nach einem der Ansprüche 1 bis 7, **dadurch gekennzeichnet, dass** wahlweise im Eintrittsbereich E und/oder Austrittsbereich A des oder jedes Strangs (12) bzw. Strangabschnitts in das Gehäuse (19) bzw. aus dem Gehäuse (19) heraus und/oder in einem mittleren Abschnitt zwischen dem Eintrittsbereich E und dem Austrittsbereich A eine Strangführungseinrichtung (16) angeordnet ist, wobei mindestens eine Strangführungseinrichtung (16) als radial verstellbare Mehrpunktlagerung ausgebildet ist.

9. Messanordnung nach Anspruch 7 oder 8, **dadurch gekennzeichnet, dass** im Auslaufbereich jedes Strangs (12) bzw. Strangabschnitts aus dem Schutzrohrabschnitt jedes Messmoduls (14) und/oder jedes Leermoduls Dichtmittel zum Abdichten eines Messmoduls (14) und/oder eines Leermoduls gegenüber einem in Förderrichtung F nachfolgenden Messmodul (14) und/oder Leermodul und/oder einer Gehäusewand vorgesehen sind, wobei das Dichtmittel zum aktiven Dichten ausgebildet und eingerichtet ist.

10. Messanordnung nach einem der Ansprüche 1 bis 9, **dadurch gekennzeichnet, dass** die Messanordnung (10) zur Messung von mindestens zwei parallel zueinander, in Förderrichtung F verlaufenden Strängen (12) bzw. Strangabschnitten ausgebildet und eingerichtet ist, derart, dass für jeden der Stränge (12) bzw. Strangabschnitte eine mindestens ein Messmodul (14) und/oder Leermodul aufweisende Messtrecke M₁ und M₂ gebildet ist, wobei in dem Messkopf (13) mindestens zwei sich in Förderrichtung F durch den gesamten Messkopf (13) und alle Messmodule (14) und/oder Leermodule erstreckende, durchgängige Strangdurchlaufkanäle (15) ausgebildet sind.

11. Messanordnung nach Anspruch 10, **dadurch gekennzeichnet, dass** der Modulträger (22) in Förderrichtung F der Stränge (12) bzw. Strangabschnitte mindestens zwei nebeneinander angeordnete Reihen von jeweils mehreren hintereinander angeordneten Steckplätzen (21) für die Messmodule (14) und/oder Leermodule aufweist, wobei die Steckplätze (21) beider Reihen in Förderrichtung F eine identische Teilung T aufweisen und die Steckplätze (21) benachbarter Reihen in Förderrichtung F versetzt zueinander angeordnet sind.

12. Messanordnung nach Anspruch10 oder 11, **dadurch gekennzeichnet, dass** die in benachbarten Reihen nebeneinander liegenden Messmodule (14) und/oder Leermodule mit den einander zugekehrten Seitenflächen miteinander geführt sind.

13. Strangeinheit (11) zum Herstellen von Strängen (12) und/oder Strangabschnitten der Tabak verarbeitenden Industrie mit einer Messanordnung (10) nach einem der Ansprüche 1 bis 12.

14. Strangeinheit (11) nach Anspruch 13, **dadurch gekennzeichnet, dass** das Gehäuse (19) quer zur Förderrichtung F des oder jedes Strangs (12) bzw. Strangabschnitts auf Führungsschienen (30) aus einer Arbeitsposition in eine Wartungsposition und umgekehrt bewegbar ist.

15. Strangeinheit (11) nach Anspruch 13 oder 14, **dadurch gekennzeichnet, dass** das Gehäuse (19) an der Strangeinheit (11) benachbart zu einer Schneideinrichtung lösbar befestigt ist und einen Deckel umfasst, der parallel zur Förderrichtung F des oder jedes Strangs (12) bzw. Strangabschnitts gelagert und werkzeugfrei entnehmbar oder zu öffnen ist und elektrische Kontakte aufweist, die beim Öffnen des Gehäuses (19) die Spannungsversorgung zum Modulträger (22) unterbrechen.

## Claims

1. Measuring arrangement (10), configured and adapted to measure rods (12) and/or rod sections which are produced in rod-making units (11) of the tobacco-processing industry and transported in conveying direction F, comprising a scanner (13) with at least two measuring modules (14) for the formation of a measuring section, wherein at least one continuous rod throughflow channel (15) extending in conveying direction F through the entire scanner (13) and all the measuring modules (14) is formed in the scanner (13) and at least one rod guiding device (16) is assigned to the scanner (13), as well as an evaluation unit (18) to which each measuring module (14) is linked via a connection, **characterised in that** all of the measuring modules (14) are arranged in a joint housing (19) of the scanner (13), wherein the measuring modules (14) can be plugged in via electric and/or pneumatic plug-in connections (17) onto a module carrier (22), which is fastened to an assembly base plate (20) of the housing (19) and provides several plug-in locations (21), with at least partially free plug-in location selection.

2. Measuring arrangement (10), configured and adapted to measure rods (12) and/or rod sections which are produced in rod-making units (11) of the tobacco-processing industry and transported in conveying direction F, comprising a scanner (13) with at least one measuring module (14) for the formation of a measuring section, wherein at least one continuous rod throughflow channel (15) extending in conveying direction F through the entire scanner (13) and each measuring module (14) is formed in the scanner (13) and at least one rod guiding device (16) is assigned to the scanner (13), as well as an evaluation unit (18) to which each measuring module (14) is linked via a connection, **characterised in that** the or each measuring module (14) is arranged in a joint housing (19) of the scanner (13), wherein each measuring module (14) can be plugged in via electric and/or pneumatic plug-in connections (17) onto a module carrier (22), which is fastened to an assembly base plate (20) of the housing (19) and provides at least two plug-in locations (21), with at least partially free plug-in location selection, wherein each measuring module-free plug-in location (21) is fitted with an empty module.

3. Measuring arrangement according to claim 1 or 2, **characterised in that** all of the plug-in connections (17) are formed as standardised interfaces for all the measuring modules (14) with the same and/or different measuring functions and/or for all empty modules.

4. Measuring arrangement according to any one of claims 1 to 3, **characterised in that** the plug-in locations (21) are arranged on the module carrier (22) with a fixed division T behind one another and/or next to one another.

5. Measuring arrangement according to any one of claims 1 to 4, **characterised in that** all the measuring modules (14) independently of their measuring function and/or all the empty modules are formed to be substantially the same, preferably identical in terms of their external geometry, the positioning of their plugs and the positioning of the rod throughflow channel section which forms the rod throughflow channel (15).

6. Measuring arrangement according to any one of claims 1 to 5, **characterised in that** a protective pipe (29) extending in conveying direction F from side wall (23) to side wall (24) of the housing (19) is arranged in each rod throughflow channel (15), wherein the protective pipe (29) is formed so that it can be pushed into the housing (19) and pulled out of the housing (19).

7. Measuring arrangement according to any one of claims 1 to 6, **characterised in that** a protective pipe section for the formation of a protective pipe (29) extending from side wall (23) to side wall (24) of the housing (19) and arranged within each rod throughflow channel (15) is assigned to each measuring module (14) and/or each empty module, wherein the protective pipe sections assigned to the measuring modules (14) are adapted to the measuring function of the respective measuring module (14).

8. Measuring arrangement according to any one of claims 1 to 7, **characterised in that** a rod guiding device (16) is arranged optionally in inlet region E and/or outlet region A of the or each rod (12) or rod section into the housing (19) or out of the housing (19) and/or in a central section between inlet region E and outlet region A, wherein at least one rod guiding device (16) is formed as a radially adjustable multi-point bearing.

9. Measuring arrangement according to claim 7 or 8, **characterised in that** sealing means for sealing off a measuring module (14) and/or an empty module with respect to a measuring module (14) downstream in conveying direction F and/or empty module and/or a housing wall are provided in the run-out region of each rod (12) or rod section out of the protective pipe section of each measuring module (14) and/or each empty module, wherein the sealing means is configured and adapted for active sealing.

10. Measuring arrangement according to any one of claims 1 to 9, **characterised in that** the measuring arrangement (10) for measuring at least two rods (12) or rod sections running parallel to one another in conveying direction F is configured and adapted such that a measuring section M₁ and M₂ having at least one measuring module (14) and/or empty module is formed for each of the rods (12) or rod sections, wherein at least two continuous rod throughflow channels (15) extending in conveying direction F through the entire scanner (13) and all the measuring modules (14) and/or empty modules are formed in the scanner (13).

11. Measuring arrangement according to claim 10, **characterised in that** the module carrier (22) has in conveying direction F of the rods (12) or rod sections at least two rows arranged next to one another of in each case several plug-in locations (21) arranged behind one another for the measuring modules (14) and/or empty modules, wherein the plug-in locations (21) of both rows have an identical division T in conveying direction F and the plug-in locations (21) of adjacent rows are arranged offset to one another in conveying direction F.

12. Measuring arrangement according to claim 10 or 11, **characterised in that** the measuring modules (14) and/or empty modules which lie next to one another in adjacent rows are guided with one another with the side faces turned towards one another.

13. Rod-making unit (11) for producing rods (12) and/or rod sections of the tobacco-processing industry with a measuring arrangement (10) according to any one of claims 1 to 12.

14. Rod-making unit (11) according to claim 13, **characterised in that** the housing (19) is movable transverse to conveying direction F of the or each rod (12) or rod section on guide rails (30) from a working position into a maintenance position and vice versa.

15. Rod-making unit (11) according to claim 13 or 14, **characterised in that** the housing (19) is fastened detachably to the rod-making unit (11) adjacent to a cutting device and comprises a cover which is mounted parallel to conveying direction F of the or each rod (12) or rod section and can be removed or opened without tools and has electric contacts which interrupt the voltage supply to the module carrier (22) during opening of the housing (19).

## Revendications

1. Dispositif de mesure (10) conçu pour et destiné à la mesure de tiges (12) et/ou de sections de tige fabriquées dans des unités de fabrication de tiges (11) de l'industrie de traitement du tabac et transportées dans la direction de transport F, comprenant une tête de mesure (13) avec au moins deux modules de mesure (14) pour former une distance de mesure, au moins un canal de passage de tige (15) continu s'étendant dans la direction de transport F à travers le tête de mesure (13) entière et tous les modules de mesure (14), étant formé dans la tête de mesure (13) et au moins un dispositif de guidage de tige (16) étant associé à la tête de mesure (13), ainsi qu'une unité d'évaluation (18) à laquelle chaque module de mesure (14) est relié par une connexion, **caractérisé en ce que** tous les modules de mesure (14) sont disposés dans un boîtier commun (19) de la tête de mesure (13), les modules de mesure (14) étant adaptés pour pouvoir être enfichables, à l'aide de connexions enfichables (17) électriques et/ou pneumatiques, sur un porte-module (22) fixé sur une plaque de base (20) du boîtier (19) et mettant à disposition plusieurs emplacements d'enfichage (21) avec un choix au moins partiellement libre des emplacements d'enfichage.

2. Dispositif de mesure (10) conçu pour et destiné à la mesure de tiges (12) et/ou de sections de tige fabriquées dans des unités de fabrication de tiges (11) de l'industrie de traitement du tabac et transportées dans la direction de transport F, comprenant une tête de mesure (13) avec au moins un module de mesure (14) pour former une distance de mesure, au moins un canal de passage de tige (15) continu s'étendant dans la direction de transport F à travers la tête de mesure (13) entière et chaque module de mesure (14), étant formé dans la tête de mesure (13) et au moins un dispositif de guidage de tige (16) étant associé à la tête de mesure (13), ainsi qu'une unité d'évaluation (18) à laquelle chaque module de mesure (14) est relié par une connexion, **caractérisé en ce que** le ou chaque module de mesure (14) est disposé dans un boîtier commun (19) de la tête de mesure (13), chaque module de mesure (14) étant adapté pour pouvoir être enfichable, à l'aide de connexions enfichables (17) électriques et/ou pneumatiques, sur un porte-module (22) fixé sur une plaque de base (20) du boîtier (19) et mettant à disposition au moins deux emplacements d'enfichage (21) avec un choix au moins partiellement libre des emplacements d'enfichage, chaque emplacement d'enfichage (21) non occupé par un module de mesure étant occupé par un module vide.

3. Dispositif de mesure selon la revendication 1 ou 2, **caractérisé en ce que** toutes les connexions enfichables (17) sont configurées comme interfaces standardisées pour tous les modules de mesure (14) ayant les mêmes fonctions de mesure et/ou des fonctions de mesure différentes et/ou pour tous les modules vides.

4. Dispositif de mesure selon l'une des revendications 1 à 3, **caractérisé en ce que** les emplacements d'enfichage (21) sur le porte-module (22) sont disposés, avec une division fixe T, les uns derrière et/ou à côté des autres.

5. Dispositif de mesure selon l'une des revendications 1 à 4, **caractérisé en ce que** tous les modules de mesure (14), indépendamment de leur fonction de mesure, et/ou tous les modules vides sont configurés essentiellement de la même façon, de préférence à l'identique, en ce qui concerne leur géométrie extérieure, le positionnement de leurs fiches et le positionnement de la section de canal de passage de tige formant le canal de passage de tige (15).

6. Dispositif de mesure selon l'une des revendications 1 à 5, **caractérisé en ce que** dans chaque canal de passage de tige (15), est disposé un tube de protection (29) s'étendant dans la direction de transport F d'une paroi latérale (23) du boîtier (19) à l'autre (24), le tube de protection (29) étant configuré pour pouvoir être glissé dans le boîtier (19) et être retiré du boîtier (19).

7. Dispositif de mesure selon l'une des revendications 1 à 6, **caractérisé en ce qu'**il est associé à chaque module de mesure (14) et/ou à chaque module vide, une section de tube de protection pour former un tube de protection (29) s'étendant d'une paroi latérale (23) du boîtier (19) à l'autre (24) et disposé à l'intérieur de chaque canal de passage de tige (15), les sections de tube de protection associées aux modules de mesure (14) étant adaptées à la fonction de mesure du module de mesure (14) respectif.

8. Dispositif de mesure selon l'une des revendications 1 à 7, **caractérisé en ce qu'**un dispositif de guidage de tige (16) est disposé, au choix, dans la zone d'entrée E et/ou dans la zone de sortie A de la ou de chaque tige (12) ou section de tige entrant dans le boîtier (19) ou sortant du boîtier (19) et/ou dans une section intermédiaire entre la zone d'entrée E et la zone de sortie A, au moins un dispositif de guidage de tige (16) étant configuré comme support multipoint radialement réglable.

9. Dispositif de mesure selon la revendication 7 ou 8, **caractérisé en ce que** des moyens d'étanchéité sont prévus, dans la zone de sortie de chaque tige (12) ou section de tige de la section de tube de protection de chaque module de mesure (14) et/ou de chaque module vide, pour rendre étanche un module de mesure (14) et/ou un module vide par rapport à un module de mesure (14) et/ou module vide et/ou une paroi de boîtier suivant dans la direction de transport F, le moyen d'étanchéité étant configur**é** et agenc**é** pour un étanchement actif.

10. Dispositif de mesure selon l'une des revendications 1 à 9, **caractérisé en ce que** le dispositif de mesure (10) est configuré et agencé pour mesurer au moins deux tiges (12) ou sections de tige s'étendant parallèlement l'une à l'autre ou les unes aux autres dans la direction de transport F, de façon que pour chacune des tiges (12) ou sections de tige soit formée une distance de mesure M₁ et M₂ comprenant au moins un module de mesure (14) et/ou un module vide, au moins deux canaux de passage de tige (15) continus étant formés dans la tête de mesure (13) qui s'étendent dans la direction de transport F à travers la tête de mesure (13) entière et tous les modules de mesure (14) et/ou modules vides.

11. Dispositif de mesure selon la revendication 10, **caractérisé en ce que** le porte-module (22) comprend, dans la direction de transport F des tiges (12) ou sections de tige, au moins deux rangés parallèlement disposées d'emplacements d'enfichage (21) ayant chacune plusieurs emplacements d'enfichage disposés les uns derrière les autres, pour les modules de mesure (14) et/ou les modules vides, les emplacements d'enfichage (21) des deux rangés présentant dans la direction de transport F une division T identique et les emplacements d'enfichage (21) de rangés avoisinantes étant décalés les uns par rapport aux autres dans la direction de transport F.

12. Dispositif de mesure selon la revendication 10 ou 11, **caractérisé en ce que** les modules de mesure (14) et/ou modules vides disposés les uns à côté des autres dans des rangés avoisinantes, sont guidés ensemble par les surfaces latérales en regard les unes des autres.

13. Unité de fabrication de tiges (11) pour la fabrication de tiges (12) et/ou de sections de tige de l'industrie de traitement du tabac dotée d'un dispositif de mesure (10) selon l'une des revendications 1 à 12.

14. Unité de fabrication de tiges (11) selon la revendication 13, **caractérisée en ce que** le boîtier (19) est adapté pour pouvoir être déplacé transversalement à la direction de transport F de la ou de chaque tige (12) ou de section de tige, sur des rails de guidage (30), d'une position de travail à une position de maintenance et inversément.

15. Unité de fabrication de tiges (11) selon la revendication 13 ou 14, **caractérisée en ce que** le boîtier (19) est fixé de manière amovible sur l'unité de fabrication de tiges (11) avoisinant à un dispositif de coupe et comprend un couvercle qui est disposé parallèlement à la direction de transport F de la ou de chaque tige (12) ou section de tige et peut être retiré ou ouvert sans outil et qui comporte des contacts électriques qui interrompent l'alimentation en tension du porte-module (22) lors de l'ouverture du boîtier (19).
